Europäisches Patentamt

**European Patent Office**

**Office européen des brevets**

(11) Veröffentlichungsnummer: **0 023 342**
**B1**

(12) **EUROPÄISCHE PATENTSCHRIFT**

(45) Veröffentlichungstag der Patentschrift:
**02.03.83**

(51) Int. Cl.³: **C 08 G 12/40,** C 08 L 61/26,
C 08 J 3/24

(21) Anmeldenummer: **80104313.4**

(22) Anmeldetag: **23.07.80**

(54) **Härtbare und gehärtete modifizierte Aminotriazinkondensate, Mittel und Verfahren zu ihrer Herstellung.**

(30) Priorität: **28.07.79 DE 2930667**

(43) Veröffentlichungstag der Anmeldung:
**04.02.81 Patentblatt 81/5**

(45) Bekanntmachung des Hinweises auf die Patenterteilung:
**02.03.83 Patentblatt 83/9**

(84) Benannte Vertragsstaaten:
**AT CH DE FR GB IT LI NL SE**

(56) Entgegenhaltungen:
**CH-A-481 957**
**GB-A-1 464 014**

(73) Patentinhaber: **CASSELLA Aktiengesellschaft, Hanauer Landstrasse 526, D-6000 Frankfurt am Main 61 (DE)**

(72) Erfinder: **Weber, Wilhelm, Dr., Lauterbacher Strasse 14a, D-6000 Frankfurt am Main 61 (DE)**
Erfinder: **Adam, Wilhelm, Dr., Schwalbenstrasse 15, D-6078 Neu-Isenburg II (DE)**

(74) Vertreter: **Urbach, Hans-Georg, Dr. et al, Hanauer Landstrasse 526, D-6000 Frankfurt am Main 61 (DE)**

**0 023 342**

## Härtbare und gehärtete modifizierte Aminotriazinkondensate, Mittel und Verfahren zu ihrer Herstellung

Es ist bekannt, daß Melamin (1,3,5-Triamino-s-triazin), Acetoguanamin (2,4-Diamino-6-methyl-s-triazin), Benzoguanamin (2,4-Diamino-6-phenyl-s-triazin) und andere Aminotriazine mit Aldehyden, insbesondere mit Formaldehyd, in verschiedenen Molverhältnissen zu noch löslichen und noch schmelzbaren Aminotriazin-Kondensaten umgesetzt werden können. Diese Produkte, auch Aminotriazinharze oder Methylolaminotriazinharze genannt, können zu unlöslichen und unschmelzbaren Produkten ausgehärtet werden und haben dadurch zahlreiche Anwendungen in der Technik gefunden, z. B. zur Oberflächenveredelung von Holzwerkstoffen, zur Herstellung von Schichtpreßstoffen, Preßmassen, Lackharzen, sowie zur Herstellung von Veredelungsmittel auf dem Textil- und Papiersektor.

Zur Anpassung an die verschiedenen Verarbeitungsbedingungen und an die gewünschten Produkteigenschaften, wie Elastizität, Rißbeständigkeit usw. ist es auch bekannt, entsprechend modifizierte Aminotriazinkondensate zu verarbeiten. Die Modifizierung kann z. B. durch Verätherung mit ein- oder mehrwertigen Alkoholen, wie Butanol, Glykol, Glyzerin, Pentaerythrit, durch Umsetzung mit Aminen oder Aminocarbonsäuren, durch Reaktion mit Sulfiten, durch Zusatz von Polyalkoholen, Zuckern, Toluolsulfonamid, Lactamen und Nitrilen durchgeführt werden (vgl. z. B. Ullmanns Enzyklopädie der techn. Chemie, 4. Auflage, Bd. 7 (1973), S. 409). Modifizierte Melamin-Tränkharze zum imprägnieren von Trägerstoffen aus Papier oder Geweben zur Herstellung von Preßschichtstoffen werden z. B. (vgl. DE-AS 1 595 368) durch Kondensation von Melamin mit Formaldehyd in wäßrigem Medium in Gegenwart von 3 bis 15 Gew.-% ε-Aminocaprolactam, bezogen auf das Gemisch aus Melamin und Formaldehyd, vorgenommen.

Bei dem Versuch, reine Methylolmelamine als Gießharze zu verwenden, erhält man nach der Aushärtung sehr spröde Gießlinge, die häufig schon während der Aushärtung platzen und Risse bekommen, so daß Aminotriazinharze keine Verwendung als Gießharze gefunden haben.

Es wurde nun überraschenderweise gefunden, daß man härtbare modifizierte Aminotriazinharze mit neuartigen Verwendungsmöglichkeiten erhält, wenn man auf eine Wasserverdünnbarkeit von 1 : 0,5 bis 1 : 5, vorzugsweise 1 : 1 bis 1 : 2, vorkondensierte Aminotriazinkondensate mit 65 bis 500%, vorzugsweise 70 bis 400%, bezogen auf das Gewicht des Triazins, eines Salzes eines Diamins mit 2 bis 18 C-Atomen und einer Dicarbonsäure mit 2 bis 18 C-Atomen und/oder eines Lactams einer Aminocarbonsäure mit 3 bis 18 C-Atomen umsetzt.

Die erfindungsgemäße Umsetzung erfolgt in einfacher Weise dadurch, daß man das auf eine Wasserverdünnbarkeit von 1 : 0,5 bis 1 : 5, vorzugsweise 1 : 1 bis 1 : 2 vorkondensierte Aminotriazinkondensat in einem geeigneten Lösungsmittel, vorzugsweise in Wasser, oder einem organischen Lösungsmittel, wie z. B. Äthanol, oder einem Gemisch aus Wasser und einem organischen Lösungsmittel ca. 5 bis 20 Minuten lang bei Raumtemperatur oder erhöhter Temperatur bis 65°C mit dem Salz des Diamins und der Dicarbonsäure (nachstehend dicarbonsaures Diamin genannt) und/oder des Lactams vermischt. Es kann auch ein Gemisch verschiedener, vorkondensierter Aminotriazinkondensate von gegebenenfalls verschiedenen Aminotriazinen sowie auch ein Gemisch verschiedener dicarbonsaurer Diaminsalze und/oder ein Gemisch verschiedener Lactame zum Einsatz kommen. Die so hergestellten, vorzugsweise wäßrigen Lösungen enthalten vorzugsweise 55 bis 70 Gew.-% des erfindungsgemäßen modifizierten Triazinharzes.

Als auf eine Wasserverdünnbarkeit von 1 : 0,5 bis 1 : 5, vorzugsweise 1 : 1 bis 1 : 2, vorkondensierte Aminotriazinkondensate kommen vor allem vorkondensierte Methylolverbindungen von Aminotriazinen in Betracht, wie z. B. die Methylolverbindungen, die durch Methylolierung des Aceto- und/oder Benzoguanamins mit 1 bis 4 Molen Formaldehyd und Kondensation auf die genannte Wasserverdünnbarkeit erhalten werden. Bevorzugt werden jedoch vorkondensierte Methylolmelamine verwendet, die durch Methylolierung von Melamin mit 1 bis 6 Molen, insbesondere mit 1,5 bis 3 Molen Formaldehyd und Kondensation auf die genannte Wasserverdünnbarkeit erhalten werden. Bei der Bestimmung der Wasserverdünnbarkeit wird eine Probe des Harzes bei 20°C mit Wasser bis zur beginnenden Trübung titriert.

Zur Herstellung der dicarbonsauren Diaminsalze sind z. B. folgende Dicarbonsäuren geeignet: Oxal-, Malon-, Bernstein-, Glutar-, Adipin-, Pimelin-, Kork-, Sebazin-, Malein-, Fumar-, Terephthal-, Dodecandicarbon-, Tetradecandicarbon-, Hexadecandicarbonsäure und als Diamine folgende Diamine: Äthylen-, Trimethylen-, Tetramethylen-, Pentamethylen-, Hexamethylen-, Octamethylen-, Decamethylen-, Dodecamethylen-, Tetradecamethylen-, Hexadecamethylen-diamin. Im Rahmen der vorliegenden Erfindung werden jedoch unter Diaminen auch solche Diamine mit 4 bis 18 C-Atomen verstanden, deren Kohlenstoffkette durch eine oder mehrere —NH-Gruppen unterbrochen ist, wie z. B. Diäthylen-triamin, Triäthylen-tetramin, Tetraäthylen-pentamin.

Geeignete Lactame sind z. B. 2-Pyrrolidon, 2-Piperidon und ε-Caprolactam.

Die Salze aus den Diaminen und den Dicarbonsäuren sind bekannt und können durch Vereinigung der Komponenten im Molverhältnis 1 : 1 in Wasser hergestellt werden. Die so erhaltene Lösung des Salzes kann direkt für die erfindungsgemäße Modifizierung verwendet werden. Ein typischer Vertreter eines derartigen Salzes ist das Salz aus Adipinsäure und Hexamethylendiamin, AH-Salz genannt.

2

Die Umsetzung der vorkondensierten Aminotriazinkondensate mit flüssigen Lactamen kann auch ganz ohne Lösungsmittel erfolgen.

Der pH-Wert der erfindungsgemäß modifizierten Harze wird normalerweise auf 5 bis 8 eingestellt. Zur pH-Einstellung werden vor allem organische Säuren, insbesondere Hydroxysäuren, wie z. B. Zitronensäure und Glykolsäure, benutzt.

Zur Herstellung der erfindungsgemäßen modifizierten härtbaren Aminotriazinkondensate sind lagerstabile trockene Mischungen eines getrockneten, auf eine Wasserverdünnbarkeit von 1 : 0,5 bis 1 : 5, vorzugsweise 1 : 1 bis 1 : 2, vorkondensierten Aminotriazinkondensates, vorzugsweise Methylolmelamins und, bezogen auf das Triazin, 65 bis 500%, vorzugsweise 70 bis 400% eines festen Salzes eines Diamins mit 2 bis 18 C-Atomen und einer Dicarbonsäure mit 2 bis 18 C-Atomen geeignet, die lediglich noch in einem geeigneten Lösungsmittel, vorzugsweise Wasser, aufgelöst zu werden brauchen.

Die erfindungsgemäß modifizierten Aminotriazinkondensate sind einige Stunden haltbar und härten dann von selbst aus. Die Aushärtung kann durch Erhitzen, z. B. 20 bis 200 minütiges Erhitzen auf 80 bis 100° C, beschleunigt werden.

Die Eigenschaften der erfindungsgemäßen modifizierten Aminotriazinkondensate können durch Variation des Methylolierungsgrades der Aminotriazine, der zugesetzten Menge des Modifizierungsmittels, Einstellung des pH-Wertes etc. verändert werden. Die erfindungsgemäßen modifizierten Aminotriazinkondensate eignen sich z. B. zur Anwendung auf folgenden Gebieten: Herstellung von Leimen, Wasserlacken, Gießkörpern, Formmassen, Bremsbelägen. Spachtelmassen, Fugendichtern, Filterschichten, Diaphragmaschichten, Trägerkörpern für Flüssigkeiten (z. B. Duftspender), Zusatzstoffen für die Formsandverfestigung und ähnliches. Eine Verstärkung von Formkörpern durch Einbau von Asbestfasern, z. B. für Bremsbeläge, Glasfasern usw. ist ebenfalls möglich.

Bei der Verwendung der erfindungsgemäßen modifizierten Aminotriazinkondensate als Gießharze lassen sich glasklare, opale bis weiß-opake Gießkörper mit einer dichten bis zu einer fein-porösen Struktur herstellen. Die weiß-opaken Gießkörper mit der fein-porösen Struktur werden insbesondere bei der Verwendung von AH-Salzen als Modifizierungsmittel erhalten. Die Eigenschaften der Gießkörper mit der feinporösen Struktur sind für verschiedene Anwendungszwecke sehr interessant. Nach der Spülung mit Wasser und anschließender Trocknung besitzen derartige Gießkörper eine Dichte von 0,5 bis 0,6 g/cm³ und können bis über 100% ihres Gewichts an einer Flüssigkeit wieder aufnehmen.

Die Festigkeit der aus den erfindungsgemäßen modifizierten Aminotriazinharzen hergestellten Gießkörper ist, wie die nachfolgende Tabelle zeigt, von der Menge des Modifizierungsmittels abhängig:

| Erfindungsgemäßes modifiziertes Melaminharz, hergestellt aus a Gew.-Teilen Methylolmelamin und b Gew.-Teilen AH-Salz | | | Eigenschaften des aus dem modifi- zierten Melaminharz hergestellten Gießkörpers | |
|---|---|---|---|---|
| a Gew.-Teile Methylolmelamin (2,6 Mol CH$_2$O/ Mol Melamin) | AH-Salz b Gew.-Teile | Gew.-% bez. auf Melamin | Bruchlast bei 8 cm kg | Durchbiegung Auflageabstand mm |
| 160 | 80 | 80,7 | 232 | 2,95 |
| 150 | 90 | 97 | 243 | 3,5 |
| 143 | 100 | 108 | 75 | 1,94 |
| 135 | 108 | 130 | 58 | 2,41 |

Die Werte beziehen sich auf einen Rundstab mit 26 mm Durchmesser.

Erfindungsgemäß mit ca. 150 Gew.-% und mehr Lactamen (bezogen auf Triazin) modifizierte Aminotriazinharze, insbesondere Melaminharze, können zu Gießkörpern ausgehärtet werden, die durchscheinend sind. Nach dem Trocknen hellen sich die Gießkörper zu schwach opalen bis glasklaren Produkten mit hohen Festigkeitswerten auf.

In den nachfolgenden Beispielen wurde die Angabe Gewichtsteile mit »Gew.T« angekürzt. Prozentangaben sind, wenn nichts anderes angegeben, Gewichtsprozente. In den Beispielen 2 bis 18 bedeutet, sofern nichts anderes erwähnt, »Methylolmelamin« das in Beispiel 1 erwähnte, auf eine Wasserverdünnbarkeit von 1 : 1,5 vorkondensierte und sprühgetrocknete Methylolmelamin mit 2,6 Mol Formaldehyd pro Mol Melamin.

**0 023 342**

## Beispiel 1

150 Gew.T Methylolmelamin (auf eine Wasserverdünnbarkeit von ca. 1 : 1,5 vorkondensiert und sprühgetrocknet, 2,6 Mol Formaldehyd/Mol Melamin); 90 Gew.T AH-Salz (Salz aus Hexamethylendiamin und Adipinsäure = 97%, bezogen auf Melamin) werden gemischt und mit 196 Gew.T Wasser von 65°C ünergossen und bis zur Lösung ca. 5 Minuten lang gerührt. Es stellt sich dabei eine Mischtemperatur von ca. 45°C ein, Nach dem Aufsteigen der Luftblasen erhält man eine klare Lösung (ca. 55%ig) mit einem pH = 8,0. Zur Aushärtung des so hergestellten modifizierten Melaminharzes wird es im Wasserbad im Verlauf von 1 bis $1^1/_2$ Stunden auf 90°C erhitzt. Bei 70°C beginnt die Lösung opal zu werden, bei 72°C ist sie undurchsichtig weiß. Das Gefäß mit dem Kondensat wird nun verschlossen, um ein Austrocknen an der Oberfläche zu verhindern. Kurz nach Erreichen der Höchsttemperatur (90°C) beginnt ein ganz schwaches Schrumpfen, so daß der feste Gießling von der Wand durch eine dünne Flüssigkeitsschicht getrennt wird. Diese Flüssigkeitsschicht erlaubt nach der Endkondensation (z. B. 45 Minuten bei 90°C) ein problemloses Entformen. Der entformte Gießkörper wird gewässert und bei 50°C bis zur Gewichtskonstanz getrocknet. Er zeigt eine mikroporöse Struktur. Die Dichte des erhaltenen, getrockneten Materials liegt bei 0,55 g/cm³. Ein Rundstab von 26 mm Durchmesser ergibt eine Biege-Bruchfestigkeit von 243 kg bei 8 cm Auflageabstand.

Legt man den Gießling wieder in Wasser, so nimmt er 115% seines Gewichts an Wasser auf, ohne äußerlich naß zu sein.

## Beispiel 2

Aus 160 Gew.T Methylolmelamin, 80 Gew.T AH-Salz ( = 81%, bezogen auf Melamin) und 194 Gew.T Wasser von 65°C wurde, wie in Beispiel 1 angegeben, ein modifiziertes Harz hergestellt, das einen pH-Wert von 7,0 zeigte. Die Aushärtung zu einem Gießkörper erfolgte wie in Beispiel 1. Bei 65°C trat beginnende Opaleszenz auf, bei 66°C war der Ansatz trüb, weiß. Kondensationsdauer $1^1/_4$ Stunden bei 90°C. Bruchlast eines getrockneten Gießlings (Rundstab 26,7 mm Durchmesser): 232 kg bei einem Auflageabstand von 8 cm.

## Beispiel 3

Aus 160 Gew.T Methylolmelamin, 99 Gew.T AH-Salz ( = 100%, bezogen auf Melamin), 208 Gew.T Wasser von 65°C und 8 Gew.T Zitronensäure wurde, wie in Beispiel 1 angegeben, ein modifiziertes Harz hergestellt, das einen pH-Wert von 6,0 aufwies. Die Aushärtung erfolgte wie in Beispiel 1. Bei 65°C trat beginnende Opaleszenz auf, bei 68°C wurde der Ansatz trüb, weiß. Kondensationsdauer $1^3/_4$ Stunden bei 90°C. Bruchlast eines getrockneten Gießlings (Rundstab 26,3 mm Durchmesser): 190 kg bei einem Auflageabstand von 8 cm.

## Beispiel 4

Aus 400 Gew.T Methylolmelamin, 175 Gew.T AH-Salz ( = 71%, bezogen auf Melamin) und 500 Gew.T Wasser von 65°C wurde, wie in Beispiel 1 angegeben, ein modifiziertes Harz hergestellt, dessen pH-Wert von 8 durch Zugabe von 30 Gew.T Zitronensäure auf 5,5 eingestellt wurde. Die Aushärtung erfolgte wie in Beispiel 1. Beginnende Opaleszenz bei 46°C. Bei 47°C war der Ansatz trüb, weiß. Ablösung von der Wand bei 83°C. Kondensationsdauer bei 90°C: $^1/_2$ Stunde. Bruchlast eines getrockneten Gießlings (Rundstab 26,3 mm Durchmesser): über 250 kg bei einem Auflageabstand von 8 cm.

## Beispiel 5

Aus 400 Gew.T Methylolmelamin (1,65 Mol Formaldehyd/Mol Melamin, auf eine Wasserverdünnbarkeit von 1 : 1 vorkondensiert und sprühgetrocknet), 200 Gew.T AH-Salz ( = 69,6%, bezogen auf Melamin), 530 Gew.T Wasser von 65°C wurde, wie in Beispiel 1 angegeben, ein modifiziertes Harz hergestellt, das einen pH-Wert von 8,0 zeigte. Die Aushärtung erfolgte wie in Beispiel 1. Bei 67°C trat beginnende Opaleszenz auf, bei 68°C war der Ansatz trüb, weiß. Kondensation bei 90°C: $^1/_2$ Stunde. Bruchlast eines getrockneten Gießlings (Rundstab 26,5 mm Durchmesser): über 250 kg bei einem Auflageabstand von 8 cm.

4

## Beispiel 6

Aus 400 Gew.T Methylolmelamin (1,65 Mole Formaldehyd/Mol Melamin, auf eine Wasserverdünnbarkeit von 1 : 1 vorkondensiert und sprühgetrocknet), 200 Gew.T. AH-Salz (= 69,6%, bezogen auf Melamin) und 530 Gew.T Wasser von 65° C wurde, wie in Beispiel 1 angegeben, ein modifiziertes Harz hergestellt, dessen pH-Wert durch Zugabe von 10 Gew.T Zitronensäure auf 7,0 eingestellt wurde. Die Aushärtung erfolgte wie in Beispiel 1. Bei 60° C trat beginnende Opaleszenz auf, bei 61° C war der Ansatz trüb, weiß. Kondensation bei 90° C: 40 Minuten. Bruchlast eines Gießlings (Rundstab 26,0 mm Durchmesser): über 250 kg bei einem Auflageabstand von 8 cm.

## Beispiel 7

Aus 80 Gew.T Methylolmelamin, 49,4 Gew.T AH-Salz (= 100%, bezogen auf Melamin), 104 Gew.T Wasser und 65° C wurde, wie in Beispiel 1 angegeben, ein modifiziertes Harz hergestellt, dessen pH-Wert von 7 durch Zugabe von Natronlauge auf 8,0 eingestellt wurde. Die Aushärtung erfolgte wie in Beispiel 1. Bei 70° C war der Ansatz opal, bei 72° C, trüb, weiß. Kondensation bei 87 bis 90° C: 1 Stunde. Bruchlast eines Gießlings (Rundstab 26,6 mm Durchmesser): über 250 kg bei einem Auflageabstand von 8 cm.

## Beispiel 8 (Vergleichsbeispiel)

Aus 100 Gew.-% Methylolmelamin, 25 Gew.T AH-Salz (= 40,5%, bezogen auf Melamin) und 102 Gew.T Wasser von 65° C wurde, wie in Beispiel 1 angegeben, eine ca. 55%ige Harzlösung mit einem pH = 7,0 hergestellt. Die Aushärtung erfolgte wie in Beispiel 1. Bei 54° C beginnende Opaleszenz, bei 60° C war der Ansatz trüb, weiß. Kondensationsdauer: 1 Stunde. Es wurde kein stabiler Gießkörper erhalten, sondern der Gießkörper zersprang nach der Abkühlung auf Raumtemperatur.

## Beispiel 9

80 Gew.T Methylolmelamin wurden in 80 Gew.T Wasser von 80° C unter Rühren gelöst und dann portionsweise ein Gemisch von 74 Gew.T ε-Caprolactam (= 150%, bezogen auf Melamin) und 6 Gew.T Zitronensäure zugegeben. Es wurde eine klare Lösung eines erfindungsgemäß modifizierten Melaminharzes erhalten. Die Aushärtung erfolgte wie in Beispiel 1. Bei 54° C bildete sich eine feste Gallerte, die bei steigender Temperatur opal wurde. Kondensation 30 Minuten bei 90° C. Es wurde ein durchsichtig, fast klarer Gießling mit folgender Eigenschaft erhalten: Bruchlast eines Rundstabes (22,6 mm Durchmesser): 248 kg bei einem Auflageabstand von 8 cm.

## Beispiel 10

Aus 50 Gew.T Methylolmelamin, 50 Gew.T Wasser von 65° C, 62 Gew.T ε-Caprolactam (= 200%, bezogen auf Melamin) und 5 Gew.T Adipinsäure wurde, wie in Beispiel 9 angegeben, eine Lösung eines erfindungsgemäß modifizierten Harzes hergestellt. Der pH-Wert der Lösung betrug 5. Die Aushärtung erfolgte wie in Beispiel 1 angegeben. Es wurde ein durchsichtig klarer Gießling mit einer Bruchlast eines Rundstabs (21 mm Durchmesser) über 250 kg bei einem Auflageabstand von 8 cm erhalten.

## Beispiel 11

120 Gew.T Methylolmelamin, 44,4 Gew.T AH-Salz (= 60%, bezogen auf Melamin) wurden in 130 Gew.T Wasser von 65° C vermischt und unter Rühren ein Gemisch von 22,2 Gew.T ε-Caprolactam (= 30%, bezogen auf Melamin) und 5 Gew.T Adipinsäure zugegeben. Die klare Lösung des modifizierten Melaminharzes besaß einen pH-Wert von 5 bis 6. Die Aushärtung erfolgte wie in Beispiel 1. Bei 63° C war der Ansatz opal, bei 65° C trüb, weiß (fest). Es wurde 1 Stunde noch bei 90° C ausgehärtet. Die Bruchlast eines Rundstabs (27,1 mm Durchmesser) betrug 118 kg bei einem Auflageabstand von 8 cm.

## Beispiel 12

80 Gew.T Methylolmelamin wurden in 80 Gew.T Wasser von 65° C gelöst. Dann wurde unter Rühren 80 Gew.T Pyrrolidon (= 162%, bezogen auf Melamin) von 35° C zugegeben. Die klare Lösung des modifizierten Melaminharzes zeigte einen pH-Wert von 7, der durch Zugabe von 5,2 Gew.T Glykolsäure auf 5 eingestellt wurde. Die Aushärtung erfolgte wie in Beispiel 1. Bei 56°C war die Lösung geliert und schwach opal. Bei 90°C wurde der Ansatz 45 Minuten gehalten.

Der Gießling war nach dem Trocknen klar durchscheinend. Die Bruchlast eines Rundstabs (22,5 mm Durchmesser) betrug über 250 kg bei einem Auflageabstand von 8 cm.

## Beispiel 13

30 Gew.T Methylolmelamin wurden in 30 Gew.T Wasser von 65°C gelöst und dann 55,5 Gew.T Pyrrolidon (= 300%, bezogen auf Melamin) von 35°C zugemischt. Der pH-Wert der Lösung des modifizierten Harzes war 6 bis 7 und wurde durch Zugabe von 1,5 Gew.T Glykolsäure auf 4,5 eingestellt. Die Aushärtung erfolgte wie in Beispiel 1. Bei 68°C gelierte die Lösung und wurde leicht opal. Bei 73°C trat Verstärkung der Opaleszenz ein. Kondensationsdauer bei 86 bis 90°C: 1 Stunde. Der Gießling war nach dem Trocknen klar durchsichtig. Die Bruchlast eines Rundstabs (22 mm Durchmesser) betrug 186 kg bei einem Auflageabstand von 8 cm.

## Beispiel 14

69 Gew.T Pyrrolidon (= 380%, bezogen auf Melamin) wurden auf 75°C erhitzt und 30 Gew.T Methylolmelamin portionsweise unter Rühren eingetragen. Das Methylolmelamin löste sich im Pyrrolidon. Die Lösung wurde auf 30°C abgekühlt (geringe Ausfällung) und 4,5 Gew.T Glykolsäure 57%ig eingerührt, wodurch der pH-Wert auf 5 zurückging. Zur Aushärtung wurde die Lösung des modifizierten Harzes im Wasserbad aufgeheizt. Bei 76°C war die Lösung wieder völlig klar, bei 85°C hochviskos, bei 89°C fest und leicht opal. Kondensationsdauer bei 90°C: 45 Minuten. Die Bruchlast eines Rundstabes (22 mm Durchmesser) betrug 150 kg bei einem Auflageabstand von 8 cm.

## Beispiel 15

A)  75 Gew.T Melamin, 119 Gew.T Formaldehyd (39 Gew.-%, 1% Methanol), 33 Gew.T Wasser und 0,1 Gew.T Pottasche
B)  70 Gew.-% ε-Caprolactam (= 93,3%, bezogen auf Melamin) und 10 Gew.T Zitronensäure.

Die unter A aufgeführten Produkte wurden unter Rühren auf 90°C erhitzt. Es entstand eine klare Lösung, die so lange bei 90°C kondensiert wurde, bis eine Probe bei 20°C nur noch 1 : 1,5 mit Wasser verdünnbar war. Nach Abkühlung auf 30°C wurden die unter B genannten Produkte als Mischung zugegeben, wobei der pH-Wert auf 5 absank. Die Aushärtung erfolgte wie in Beispiel 1. Bei 48°C wurde die Lösung trüb, anschließend undurchsichtig weiß. Kondensationsdauer bei 90°C: 45 Minuten. Die Bruchlast eines Gießlings (Rundstab mit 26,8 mm Durchmesser, 8 cm Auflageabstand) betrug 198 kg.

## Beispiel 16

42 Gew.T Sebazinsäure wurden in kleinen Portionen unter Rühren zu einer Mischung von 22 Gew.T Triethylentetramin in 50 Gew.T Wasser gegeben. Der pH-Wert der erhaltenen Lösung A betrug 6,5.

Aus 69 Gew.T Methylolmelamin, 56 Gew.T Wasser und 0,3 Gew.T Zitronensäure wurde unter Rühren die Lösung B bereitet, deren pH-Wert 6 betrug. Dann wurde die Lösung B in die Lösung A eingerührt. Der pH-Wert der Lösung des modifizierten Melaminharzes betrug 6,5. Die Aushärtung erfolgte wie in Beispiel 1.

Bei 48°C gelierte die Lösung, bei 54°C war sie weiß, trüb. Der Ansatz wurde bei 90°C noch 30 Minuten gehalten. Die Bruchlast eines Rundstabs (26 mm Durchmesser) betrug 112 kg bei einem Auflageabstand von 8 cm.

## Beispiel 17

A)  27 Gew.T Acetoguanamin, 33,3 Gew.T Formaldehyd (39 Gew.-% mit 1% Methanol), 19,7 Gew.T Wasser,
B)  30 Gew.T Pyrrolidon (= 111%, bezogen auf Acetoguanamin),
C)  2,6 Gew.T Glykolsäure 57%ig.

Die unter A aufgeführten Produkte werden vermischt, mit Natronlauge auf pH = 9 eingestellt und

6

auf 90°C unter Rühren aufgeheizt. Man erhielt eine klare Lösung, die noch 75 Minuten lang bei 90°C gehalten wurde. Man kühlte ab auf ca. 50°C und gab B und C dazu und heizte wieder in ca. 1 Stunde auf 90°C auf. Bei 87°C begann die klare Lösung opak zu werden und erstarrte bei 89°C zu einer weißen Masse, die noch bei 90°C ca. 2 Stunden lang gehalten wurde. Die Bruchlast eines Gießlings (Rundstab 24 mm Durchmesser, 8 cm Auflageabstand) betrug 45 kg.

## Beispiel 18

Aus 80 Gew.T Methylolmelamin, 62 Gew.T AH-Salz (= 125%, bezogen auf Melamin) und 110 Gew.T Wasser von 65°C wurde, wie in Beispiel 1 angegeben, eine etwa 56%ige Lösung eines modifizierten Harzes mit einem pH-Wert von 7,0 hergestellt. Durch Zugabe von 13 Gew.T Glykolsäure 57%ig wurde der pH-Wert auf 6,0 gesenkt. Diese Lösung war mehrere Stunden haltbar, wobei die Viskosität allmählich anstieg. Sie wurde zum Lackieren von Holz verwendet, wobei noch geringe Mengen an Netzmitteln, Triglykol und Methylzellulose, zugegeben wurde. Der Überzug trocknete nach etwa 24 Stunden und ergab eine glänzende Oberfläche.

## Beispiel 19

10 Gew.T Methylolmelamin und 7 Gew.T AH-Salz wurden gemischt und in 14 Gew.T Wasser von 65°C, wie in Beispiel 1 beschrieben, eingerührt. Dann wurden 1,3 Gew.T Glykolsäure zugemischt. Nach weiterer Zugabe von 10 Gew.T Celite (wassergesättigt) und 4,5 Gew.T Mikrozellulose und etwas Netzmittel wurde eine Spachtelmasse erhalten, die nach Auftragen nach 2 Tagen schleifbar war.

Erfindungsgemäß hergestellte Gießkörper lassen sich auch hervorragend spanabhebend bearbeiten, z. B. durch Bohren, Drehen oder Sägen und können durch die Wahl entsprechender Gießformen und eventuelle Nachbearbeitung in jede gewünschte Form gebracht werden. Es lassen sich dadurch Formkörper aller Art für technischen und Konsumbedarf herstellen, z. B. Bekleidungsknöpfe, Bedienungsknöpfe, Griffe, Ringe, Bügel, Klammern, Achsen, Zeiger, Behälter und Gehäuse und Teile davon, Spangen, Dosen, Hülsen, Abdeckplatten, Verkleidungen, Zierblenden und Ziergegenstände, Räder, Rollen, Schrauben, Rohre und Stäbe beliebigen Querschnitts, Filterkörper, Aufsteller, Schalterteile usw. Besonders interessante Anwendungsmöglichkeiten gestatten erfindungsgemäße poröse Formkörper, die mit den verschiedensten Flüssigkeiten, z. B. Parfüm, Duft- oder Riechstoffen, Schmierstoffen etc. getränkt werden können und dadurch z. B. als Duftspender oder Lager Verwendung finden können. Vorteilhaft ist auch, daß zur Herstellung der erfindungsgemäßen Produkte nur ein geringer Anteil von Ausgangsprodukten auf Erdölbasis erforderlich ist.

## Patentansprüche für die Vertragsstaaten: CH, DE, FR, GB, IT, LI, NL, SE

1. Härtbares modifiziertes Aminotriazinkondensat, dadurch herstellbar, daß ein auf eine Wasserverdünnbarkeit von 1 : 0,5 bis 1 : 5 vorkondensiertes Aminotriazinkondensat mit 65 bis 500 Gew.-%, bezogen auf Triazin, eines Salzes eines Diamins mit 2 bis 18 C-Atomen und einer Dicarbonsäure mit 2 bis 18 C-Atomen und/oder eines Lactams einer Aminocarbonsäure mit 3 bis 18 C-Atomen bei Temperaturen bis 65°C umgesetzt wird.

2. Härtbares modifiziertes Aminotriazinkondensat nach Anspruch 1, dadurch gekennzeichnet, daß die Umsetzung in einem Lösungsmittel, vorzugsweise in Wasser, durchgeführt wird.

3. Härtbares modifiziertes Aminotriazinkondensat nach einem der Ansprüche 1 oder 2, dadurch gekennzeichnet, daß das vorkondensierte Aminotriazinkondensat eine Wasserverdünnbarkeit von 1 : 1 bis 1 : 2 besitzt.

4. Härtbares modifiziertes Aminotriazinkondensat nach einem oder mehreren der Ansprüche 1 bis 3, dadurch gekennzeichnet, daß das vorkondensierte Aminotriazinkondensat ein Methylolmelamin mit 1 bis 6, vorzugsweise 1,5 bis 3 Methylolgruppen ist, das auf die angegebene Wasserverdünnbarkeit vorkondensiert wurde.

5. Härtbares modifiziertes Aminotriazinkondensat nach einem oder mehreren der Ansprüche 1 bis 4, dadurch gekennzeichnet, daß, bezogen auf Triazin, 70 bis 400 Gew.-% des dicarbonsauren Diamins und/oder des Lactams eingesetzt wird.

6. Härtbares modifiziertes Aminotriazinkondensat nach einem oder mehreren der Ansprüche 1 bis 5, dadurch gekennzeichnet, daß als dicarbonsaures Diamin das Salz aus Adipinsäure und Hexamethylendiamin (AH-Salz) eingesetzt wird.

7. Härtbares modifiziertes Aminotriazinkondensat nach einem oder mehreren der Ansprüche 1 bis 6, dadurch gekennzeichnet, daß als Lactam das ε-Caprolactam eingesetzt wird.

8. Härtbares modifiziertes Aminotriazinkondensat nach einem oder mehreren der Ansprüche 1 bis 7, dadurch gekennzeichnet, daß als Lactam das 2-Pyrrolidon eingesetzt wird.

9. Verfahren zur Herstellung eines härtbaren modifizierten Aminotriazinkondensats nach einem oder mehreren der Ansprüche 1 bis 8, dadurch gekennzeichnet, daß ein auf eine Wasserverdünnbarkeit von 1 : 0,5 bis 1 : 5 vorkondensiertes Aminotriazinkondensat mit 65 bis 500 Gew.-%, bezogen auf Triazin, eines Salzes eines Diamins mit 2 bis 18 C-Atomen und einer Dicarbonsäure mit 2 bis 18 C-Atomen und/oder eines Lactams einer Aminocarbonsäure mit 3 bis 18 C-Atome bei Temperaturen bis 65°C umgesetzt wird.

10. Mittel zur Herstellung der Aminotriazinkondensate nach einem oder mehreren der Ansprüche 1 bis 8, gekennzeichnet durch ein Gemisch eines getrockneten, auf eine Wasserverdünnbarkeit von 1 : 0,5 bis 1 : 5, vorzugsweise 1 : 1 bis 1 : 2, vorkondensierten Aminotriazinkondensats, vorzugsweise Methylolmelamins, und, bezogen auf das Triazin, 65 bis 500 Gew.-%, vorzugsweise 70 bis 400 Gew.-%, eines festen Salzes eines Diamins mit 2 bis 18 C-Atomen und einer Dicarbonsäure mit 2 bis 18 C-Atomen.

11. Modifiziertes Aminotriazinkondensat nach einem oder mehreren der Ansprüche 1 bis 8 in ausgehärtetem Zustand.

12. Verfahren zur Herstellung der ausgehärteten modifizierten Aminotriazinkondensate nach Anspruch 11 bzw. zur Aushärtung des Aminotriazinkondensats nach einem oder mehreren der Ansprüche 1 bis 8, dadurch gekennzeichnet, daß das Aminotriazinkondensat nach einem oder mehreren der Ansprüche 1 bis 8 20 bis 200 Minuten einer Temperatur von 60 bis 100°C ausgesetzt wird.

## Patentansprüche für den Vertragsstaat: AT

1. Verfahren zur Herstellung eines härtbaren modifizierten Aminotriazinkondensats, dadurch gekennzeichnet, daß ein auf eine Wasserverdünnbarkeit von 1 : 0,5 bis 1 : 5 vorkondensiertes Aminotriazinkondensat mit 65 bis 500 Gew.-%, bezogen auf Triazin, eines Salzes eines Diamins mit 2 bis 18 C-Atomen und einer Dicarbonsäure mit 2 bis 18 C-Atomen und/oder eines Lactams einer Aminocarbonsäure mit 3 bis 18 C-Atomen bei Temperaturen bis 65°C umgesetzt wird.

2. Verfahren nach Anspruch 1, dadurch gekennzeichnet, daß die Umsetzung in einem Lösungsmittel, vorzugsweise in Wasser, durchgeführt wird.

3. Verfahren nach einem der Ansprüche 1 oder 2, dadurch gekennzeichnet, daß ein vorkondensiertes Aminotriazinkondensat mit einer Wasserverdünnbarkeit von 1 : 1 bis 1 : 2 verwendet wird.

4. Verfahren nach einem der Ansprüche 1 bis 3, dadurch gekennzeichnet, daß als vorkondensiertes Aminotriazinkondensat ein Methylolmelamin mit 1 bis 6, vorzugsweise 1,5 bis 3 Methylolgruppen, das auf die angegebene Wasserverdünnbarkeit vorkondensiert wurde, verwendet wird.

5. Verfahren nach einem der Ansprüche 1 bis 4, dadurch gekennzeichnet, daß, bezogen auf Triazin, 70 bis 400 Gew.-% des dicarbonsauren Diamins und/oder des Lactams eingesetzt werden.

6. Verfahren nach einem der Ansprüche 1 bis 5, dadurch gekennzeichnet, daß als dicarbonsaures Diamin das Salz aus Adipinsäure und Hexamethylendiamin (AH-Salz) eingesetzt wird.

7. Verfahren nach einem der Ansprüche 1 bis 6, dadurch gekennzeichnet, daß als Lactam das ε-Caprolactam eingesetzt wird.

8. Verfahren nach einem der Ansprüche 1 bis 7, dadurch gekennzeichnet, daß als Lactam das 2-Pyrrolidon eingesetzt wird.

9. Mittel zur Durchführung des Verfahrens nach einem der Ansprüche 1 bis 8, gekennzeichnet durch ein trockenes Gemisch eines getrockneten, auf eine Wasserverdünnbarkeit von 1 : 0,5 bis 1 : 5, vorzugsweise 1 : 1 bis 1 : 2 vorkondensierten Aminotriazinkondensats, vorzugsweise Methylolmelamins, und, bezogen auf das Triazin, 65 bis 500%, vorzugsweise 70 bis 400% eines festen Salzes eines Diamins mit 2 bis 18 C-Atomen und einer Dicarbonsäure mit 2 bis 18 C-Atomen.

10. Verfahren zur Aushärtung der nach dem Verfahren der Ansprüche 1 bis 8 hergestellten modifizierten Aminotriazinkondensate, dadurch gekennzeichnet, daß die nach den Ansprüchen 1 bis 8 hergestellten Aminotriazinkondensate 20 bis 200 Minuten einer Temperatur von 60 bis 100°C ausgesetzt werden.

## Claims for the Contracting states: CH, DE, FR, GB, IT, LI, NL, SE

1. Curable, modified aminotriazine condensation product preparable by reacting, at temperatures of up to 65°C, an aminotriazine condensation product which has been precondensed to a dilutability ratio with water of 1 : 0,5 to 1 : 5, with 65 to 500% by weight, relative to the triazine, of a salt of a diamine having 2 to 18 C atoms and a dicarboxylic acid having 2 to 18 C atoms, and/or of a lactam of an aminocarboxylic acid having 3 to 18 C atoms.

2. Curable, modified aminotriazine condensation product according to Claim 1, characterised in that the reaction is carried out in a solvent, preferably in water.

3. Curable, modified aminotriazine condensation product according to Claim 1 or 2, characterised in that the precondensed aminotriazine condensation product has a dilutability ratio with water of 1 : 1 to 1 : 2.

4. Curable, modified aminotriazine condensation product according to one or several of Claims 1 to 3, characterised in that the precondensed aminotriazine condensation product is a methylolmelamine which has 1 to 6, preferably 1,5 to 3, methylol groups and which has been precondensed to the dilutability ration with water indicated.

5. Curable, modified aminotriazine condensation product according to one or several Claims 1 to 4, characterised in that 70 to 400% by weight of the diaminedicarboxylate and/or of the lactam have been employed, relative to the triazine.

6. Curable, modified aminotriazine condensation product according to one or several of Claims 1 to 5, characterised in that the diaminedicarboxylate employed is the salt formed from adipic acid and hexamethylenediamine (AH salt).

7. Curable, modified aminotriazine condensation product according to one or several of Claims 1 to 6, characterised in that the lactam employed is $\varepsilon$-caprolactam.

8. Curable, modified aminotriazine condensation product according to one or several of Claims 1 to 7, characterised in that the lactam employed is 2-pyrrolidone.

9. Process for the manufacture of a curable, modified aminotriazine condensation product according to one or several of Claims 1 to 8, characterised in that an aminotriazine condensation product which has been precondensed to a diultability ratio with water of 1 : 0,5 to 1 : 5 is reacted, at temperatures of up to 65°C, with 65 to 500% by weight, relative to the triazine, of a salt of a diamine having 2 to 18 C atoms and a dicarboxylic acid having 2 to 18 C atoms, and/or of a lactam of an aminocarboxylic acid having 3 to 18 C atoms.

10. Means for the manufacture of the aminotriazine condensation products according to one or several of Claims 1 to 8, characterised by a mixture of a dried aminotriazine condensation product, preferably methylolmelamine, which has been precondensed to a dilutability ration with water of 1 : 0,5 to 1 : 5, preferably 1 : 1 to 1 : 2, and, relative to the triazine, 65 to 500%, preferably 70 to 400%, of a solid salt of diamine having 2 to 18 C atoms and a dicarboxylic acid having 2 to 18 C atoms.

11. Modified aminotriazine condensation product according to one or several of Claims 1 to 8, in a cured state.

12. Process for the manufacture of the cured, modified aminotriazine condensation products according to Claim 11, or for curing the aminotriazine condensation products according to one or several of Claims 1 to 8, characterised in that the aminotriazine condensation product according to one or several of Claims 1 to 8 are exposed to a temperature from 60 to 100°C for 20 to 200 minutes.

## Claims for the Contracting state: AT

1. Process for the manufacture of a curable, modified aminotriazine condensation product, characterised in that an aminotriazine condensation product which has been precondensed to a dilutabillity ration with water of 1 : 0.5 to 1 : 5, is reacted, at temperatures of up to 65°C, with 65 to 500% by weight, relative to the triazine, of a salt of a diamine having 2 to 18 C atoms and a dicarboxylic acid having 2 to 18 C atoms, and/or of a lactam of an aminocarboxylic acid having 3 to 18 C atoms.

2. The process of Claim 1, characterised in that the reaction is carried out in a solvent, preferably in water.

3. The process of Claims 1 and 2, characterised in that a precondensed aminotriazine condensation product having a dilutability ratio with water of 1 : 1 to 1 : 2 is used.

4. The process of one of Claims 1 to 3, characterised in that the precondensed aminotriazine condensation product is a methylolmelamine which has 1 to 6, preferably 1.5 to 3, methylol groups and which has been precondensed to the dilutability ratio with water indicated.

5. The process of one of Claims 1 to 4, characterised in that 70 to 400% by weight of the diaminedicarboxylate and/or of the lactam have been employed, relative to the triazine.

6. The process of one of Claims 1 to 5, characterised in that the diaminedicarboxylate employed is the salt formed from adipic acid and hexamethylenediamine (AH salt).

7. The process of one of Claims 1 to 6, characterised in that the lactam employed is $\varepsilon$-caprolactam.

8. The process of one of Claims 1 to 7, characterised in that the lactam employed is 2-pyrrolidone.

9. Means for carrying out the process of one of Claims 1 to 8, characterised by a dry mixture of a dried aminotriazine condensation product, preferably methylolmelamine, which has been precondensed to a dilutability ratio with water of 1 : 0.5 to 1 : 5, preferably 1 : 1 to 1 : 2 and, relative to the triazine, 65 to 500%, preferably 70 to 400%, of a solid salt of diamine having 2 to 18 C atoms and a dicarboxylic acid having 2 to 18 C atoms.

10. Process for curing the aminotriazine condensation products which have been prepared according to the process of Claims 1 to 8, characterised in that the aminotriazine condensation products prepared according to one or several of Claims 1 to 8 are exposed to a temperature from 60 to 100°C for 20 to 200 minutes.

**0 023 342**

## Revendications pour les Etats contractants: CH, DE, FR, GB, IT, LI, NL, SE

1. Produit de condensation d'aminotriazine, modifié et durcissable, pouvant être produit en faisant réagir un produit de condensation d'aminotriazine, précondensé jusqu'à une diluabilité à l'eau de 1 : 0,5 à 1 : 5, avec 65 à 500% en poids, par rapport à la triazine, d'un sel d'une diamine comportant 2 à 18 atomes de carbone et d'un acide dicarboxylique comportant 2 à 18 atomes de carbone et, éventuellement ou en variante, d'un lactame d'un acide aminocarboxylique comportant 3 à 18 atomes de carbone à des températures allant jusqu'à 65° C.

2. Produit de condensation d'aminotriazine, modifié et durcissable selon la revendication 1, caractérisé en ce qu'on effectue la réaction dans un solvant, avantageusement dans de l'eau.

3. Produit de condensation d'aminotriazine, modifié et durcissable selon l'une des revendications 1 et 2, caractérisé en ce que le produit de condensation d'aminotriazine précondensé présente une diluabilité à l'eau de 1 : 1 à 1 : 2.

4. Produit de condensation d'aminotriazine, modifié et durcissable selon une ou plusieurs des revendications 1 à 3, caractérisé en ce que le produit de condensation d'aminotriazine précondensé est une méthylolmélamine comportant 1 à 6, avantageusement 1,5 à 3 groupes de méthylol, qui a été précondensée jusqu'à la diluabilité à l'eau indiquée.

5. Produit de condensation d'aminotriazine, modifié et durcissable selon une ou plusieurs des revendications 1 à 4, caractérisé en ce qu'on utilise, par rapport à la triazine, 70 à 400% en poids du sel de diamine d'acide dicarboxylique et, éventuellement ou en variante, du lactame.

6. Produit de condensation d'aminotriazine modifié et durcissable selon une ou plusieurs des revendications 1 à 5, caractérisé en ce qu'on utilise comme sel de diamine d'acide dicarboxylique le sel de l'acide adipique et de l'hexaméthylènediamine (sel AH).

7. Produit de condensation d'aminotriazine modifié et durcissable selon une ou plusieurs des revendications 1 à 6, caractérisé en ce qu'on utilise comme lactame l'$\varepsilon$-caprolactame.

8. Produit de condensation d'aminotriazine, modifié et durcissable, selon une ou plusieurs des revendications 1 à 7, caractérisé en ce qu'on utilise comme lactame la pyrrolidone-2.

9. Procédé pour fabriquer un produit de condensation d'aminotriazine, modifié et durcissable, selon une ou plusieurs des revendications 1 à 8, caractérisé en ce qu'on fait réagir un produit de condensation d'aminotriazine, précondensé jusqu'à une diluabilité à l'eau de 1 : 0,5 à 1 : 5, avec 65 à 500% en poids, par rapport à la triazine, d'un sel d'une diamine comportant 2 à 18 atomes de carbone et d'un acide dicarboxylique comportant 2 à 18 atomes de carbone et, éventuellement ou en variante, d'un lactame d'un acide aminocarboxylique comportant 3 à 18 atomes de carbone, à des températures allant jusqu'à 65° C.

10. Moyens pour fabriquer le produit de condensation d'aminotriazine selon une ou plusieurs des revendications 1 à 8, caractérisé en ce qu'il consiste en un mélange d'un produit de condensation d'aminotriazine, précondensé jusqu'à une diluabilité à l'eau de 1 : 0,5 à 1 : 5, avantageusement 1 : 1 à 1 : 2, avantageusement de la méthylolmélamine et, par rapport à la triazine, de 65 à 500% en poids, avantageusement 70 à 400% en poids d'un sel solide d'une diamine comportant 2 à 18 atomes de carbone et d'un acide dicarboxylique comportant 2 à 18 atomes de carbone.

11. Produit de condensation d'aminotriazine modifié, selon une ou plusieurs des revendications 1 à 8, à l'état durci.

12. Procédé pour fabriquer les produits de condensation d'aminotriazine, modifiés et durcis selon la revendication 11, ou pour faire durcir le produit de condensation d'aminotriazine selon une ou plusieurs des revendications 1 à 8, caractérisé en ce qu'on soumet le produit de condensation d'aminotriazine selon une ou plusieurs des revendications 1 à 8, durant 20 à 200 minutes à une température de 60 à 100° C.

## Revendications pour l'Etat contractant: AT

1. Procédé pour fabriquer un produit de condensation d'aminotriazine, modifié et durcissable, caracterisé en ce qu'on fait réagir un produit de condensation d'aminotriazine, précondensé jusqu'à une diluabilité à l'eau de 1 : 0,5 à 1 : 5, avec 65 à 500% en poids, par rapport à la triazine, d'un sel d'une diamine comportant 2 à 18 atomes de carbone et d'un acid dicarboxylique comportant 2 à 18 atomes de carbone et, éventuellement ou en variante, d'un lactame d'un acide aminocarboxylique comportant 3 à 18 atomes de carbone à des températures allant jusqu'à 65° C.

2. Procédé selon la revendication 1, caractérisé en ce qu'on effectue la réaction dans un solvant, avantageusement dans de l'eau.

3. Procédé selon l'une des revendications 1 et 2, caractérisé en ce que le produit de concensation d'aminotriazine précondensé présente une diluabilité à l'eau de 1 : 1 à 1 : 2.

4. Procédé selon l'une des revendications 1 à 3, caractérisé en ce que le produit de condensation d'aminotriazine précondensé est une méthylolmélamine comportant 1 à 6, avantageusement 1,5 à 3, groupes de méthylol, qui a été précondensée jusqu'à la diluabilité à l'eau indiquée.

5. Procédé selon l'une des revendications 1 à 4, caractérisé en ce qu'on utilise, par rapport à la

10

triazine, 70 à 400% en poids du sel de diamine d'acide dicarboxylique et, éventuellement ou en variante, du lactame.

6. Procédé selon l'une des revendications 1 à 5, caractérisé en ce qu'on utilise comme sel de diamine d'acide dicarboxylique le sel de l'acide adipique et de l'hexaméthylènediamine (sel AH).

7. Procédé selon l'une des revendications 1 à 6, caractérisé en ce qu'on utilise comme lactame l'ε-caprolactame.

8. Procédé selon l'une des revendications 1 à 7, caractérisé en ce qu'on utilise comme lactame la pyrrolidone-2.

9. Moyens pour la mise en oeuvre du procédé selon l'une des revendications 1 à 8, caractérisé en ce qu'il consiste en un mélange sec d'un produit de condensation d'aminotriazine séché et précondensé jusqu'à une diluabilité à l'eau de 1 : 0,5 à 1 : 5, avantageusement 1 : 1 à 1 : 2, de la méthylolmélamine et, par rapport à la triazine, de 65 à 500% en poids, avantageusement 70 à 400% en poids, d'un sel solide d'une diamine comportant 2 à 18 atomes de carbone et d'un acide dicarboxylique comportant 2 à 18 atomes de carbone.

10. Procédé pour faire durcir les produits de condensation d'aminotriazine préparés selon l'une des revendications 1 à 8, caractérisé en ce qu'on soumet les produits de condensation d'aminotriazine préparés selon les revendications 1 à 8, durant 20 à 200 minutes à une température de 60 à 100°C.